# EUROPÄISCHE PATENTSCHRIFT

(11) **EP 4 278 215 B1**
(45) Veröffentlichungstag und Bekanntmachung des Hinweises auf die Patenterteilung: **25.11.2026**
(21) Anmeldenummer: 21824532.2
(22) Anmeldetag: 02.12.2021
(51) Int. Cl.: G01S 17/931, G01S 7/497, G01S 17/42

(54) **VERFAHREN ZUR KALIBRIERUNG EINES LASERSCANNERS UND TECHNISCHE ANLAGE**
METHOD FOR THE CALIBRATION OF A LASER SCANNER AND TECHNICAL FACILITY
PROCÉDÉ POUR LA CALIBRATION D'UN SCANNER À LASER ET UNITÉ TECHNIQUE

(30) Priorität: 14.01.2021 DE 102021000126
(43) Veröffentlichungstag der Anmeldung: 22.11.2023
(73) Patentinhaber: SEW-EURODRIVE GmbH & Co KG, 76646 Bruchsal (DE)
(72) Erfinder: SLISKOVIC, Maja, 76275 Ettlingen (DE); HARR, Valentin, 72213 Altensteig (DE)
(86) Internationale Anmeldenummer: PCT/EP2021/084026
(87) Internationale Veröffentlichungsnummer: WO 2022/152463

(56) Entgegenhaltungen:
- EP-A1- 2 210 780
- EP-A2- 1 615 047
- WO-A1-2021/170292
- JP-A- 2009 168 472

## Beschreibung

Die vorliegende Erfindung betrifft ein Verfahren zur Kalibrierung eines Laserscanners eines Fahrzeugs mittels mindestens einer Reflexionseinheit zur Reflexion eines Laserstrahls des Laserscanners. Die vorliegende Erfindung betrifft auch eine technische Anlage, die zur Ausführung des erfindungsgemäßen Verfahrens eingerichtet ist.

Es sind Fahrzeuge, insbesondere autonom fahrende Fahrzeuge, wie beispielsweise selbstfahrende mobile Transportsysteme, bekannt, welche einen oder mehrere Laserscanner aufweisen. Solche mobilen Transportsysteme dienen beispielsweise zum Transport von Gegenständen innerhalb einer technischen Anlage. Bei der technischen Anlage handelt es sich insbesondere um eine industrielle Anwendung, beispielsweise ein Produktionswerk. Ein Laserscanner sendet einen Laserstrahl aus, detektiert einen reflektierten Laserstrahl und berechnet daraus eine Entfernung zu einem Objekt, das den Laserstrahl reflektiert. Ein Laserscanner dient dem autonom fahrenden Fahrzeug insbesondere dazu, Hindernisse in der technischen Anlage zu erkennen.

Der Laserscanner des Fahrzeugs sollte derart ausgerichtet sein, dass von dem Laserscanner ausgesandte Laserstrahlen möglichst parallel zu einem Boden, auf welchem das Fahrzeug sich befindet, verlaufen. Damit wird erreicht, dass die Laserstrahlen nicht von dem Boden reflektiert werden, sondern von Objekten, insbesondere Hindernissen, in der Umgebung. Solche Objekte sind dann für die Ortung und die Navigation des Fahrzeugs verwendbar. Eine Ausrichtung des Laserscanners derart, dass die Laserstrahlen parallel zu einem Boden, also horizontal, verlaufen, wird als Kalibrierung des Laserscanners bezeichnet.

Aus der DE 10 2004 033 114 A1 ist ein Verfahren zur Kalibrierung eines Abstandsbildsensors bekannt. Dazu wird eine Vorrichtung verwendet, die Kalibrierobjekte mit drei Kalibrierflächen aufweist.

Die DE 101 16 278 A1 offenbart ein Verfahren zum Abgleich eines an einem Fahrzeug angeordneten Abstandssensors. Dazu wird eine Vorrichtung verwendet, die drei Referenzobjekte aufweist.

Aus der JP 2009-168472 A ein Verfahren zur Kalibrierung eines Laserscanners bekannt. Dabei wird ein Laserscanner vor einer Reflexionseinheit angeordnet, welche mehrere Reflexionsflächen aufweist. Die von dem Laserscanner ausgesandten Laserstrahlen werden von den Reflexionsflächen reflektiert.

Aus der EP 1 615 047 A2 ist ein Verfahren zur Kalibrierung eines optischen Abstandssensors an einem Fahrzeug bekannt. Dabei werden Abstände zwischen dem Abstandsbildsensor und Bereichen auf wenigstens einer Kalibrierfläche ermittelt.

Aus der EP 2 210 780 A1 sind ein System und ein Verfahren zur Ausrichtung von fahrzeugmontierten Vorrichtungen bekannt. Bei den besagten Vorrichtungen handelt es sich beispielsweise um einen Radarsensor.

Der Erfindung liegt die Aufgabe zugrunde, ein Verfahren zur Kalibrierung eines Laserscanners eines Fahrzeugs sowie eine technische Anlage zu verbessern.

Die Aufgabe wird durch ein Verfahren zur Kalibrierung eines Laserscanners mit den in Anspruch 1 angegebenen Merkmalen gelöst. Vorteilhafte Ausgestaltungen und Weiterbildungen sind Gegenstand der Unteransprüche. Die Aufgabe wird durch eine technische Anlage mit den in Anspruch 12 angegebenen Merkmalen gelöst.

Gemäß einem erfindungsgemäßen Verfahren zur Kalibrierung eines Laserscanners eines Fahrzeugs mittels mindestens einer Reflexionseinheit zur Reflexion eines Laserstrahls des Laserscanners umfasst die mindestens eine Reflexionseinheit einen ersten Schild, einen zweiten Schild und einen Schirm. Dabei ist der erste Schild in einer Strahlrichtung zwischen dem zweiten Schild und dem Schirm angeordnet, und der erste Schild weist eine erste Reflexionsfläche auf, die sich zumindest annähernd rechtwinklig zu der Strahlrichtung erstreckt, und der zweite Schild weist eine zweite Reflexionsfläche auf, die sich zumindest annähernd rechtwinklig zu der Strahlrichtung erstreckt, und der Schirm weist eine dritte Reflexionsfläche auf, die sich zumindest annähernd rechtwinklig zu der Strahlrichtung erstreckt. Der erste Schild ist in einer Vertikalrichtung derart versetzt zu dem zweiten Schild angeordnet, dass zwischen dem ersten Schild und dem zweiten Schild ein Spalt gebildet ist, der sich in die Vertikalrichtung und in eine Querrichtung erstreckt, und der Schirm ist derart ausgebildet und angeordnet, dass eine Projektion des Spalts in Strahlrichtung auf die dritte Reflexionsfläche des Schirms fällt. Eine Ausrichtung des Laserscanners wird überprüft, indem ein Laserstrahl des Laserscanners auf die mindestens eine Reflexionseinheit zumindest annähernd in der Strahlrichtung gerichtet wird, und der Laserstrahl in der Querrichtung entlang der mindestens einen Reflexionseinheit bewegt wird, und für mehrere Positionen des Laserstrahls in der Querrichtung jeweils eine Entfernung des Laserscanners zu derjenigen Reflexionsfläche, von welcher der Laserstrahl reflektiert wird, gemessen wird, und aus den gemessenen Entfernungen des Laserscanners zu der jeweiligen Reflexionsfläche eine Ausrichtung des Laserscanners ermittelt wird, und wobei bei fehlerhafter Ausrichtung des Laserscanners die Ausrichtung des Laserscanners korrigiert und/oder eine Anweisung zur Korrektur gegeben wird. Die Anweisung zur Korrektur wird beispielsweise an einen Zentralrechner oder an eine Bedienperson übermittelt.

Die Vertikalrichtung erstreckt sich rechtwinklig zu der Strahlrichtung. Die Vertikalrichtung erstreckt sich auch rechtwinklig zu der Querrichtung. Auch die Strahlrichtung erstreckt sich rechtwinklig zu der Querrichtung. Die hier verwendeten Richtungsangaben Vertikalrichtung, Querrichtung und Strahlrichtung sind jeweils in Bezug auf die Reflexionseinheit definiert. Jede Richtung, die rechtwinklig zu der Vertikalrichtung verläuft, wird im Folgenden auch als eine horizontale Richtung bezeichnet. Die Querrichtung und die Strahlrichtung stellen somit horizontale Richtungen dar. Die Vertikalrichtung verläuft auch zumindest annähernd rechtwinklig zu einem Boden, auf welchem die mindestens eine Reflexionseinheit steht, und auf welchem sich das Fahrzeug befindet. Eine Ausrichtung des Laserscanners derart, dass die Laserstrahlen des Laserscanners in eine horizontale Richtung verlaufen, wird als Kalibrierung des Laserscanners bezeichnet.

Während der Kalibrierung befindet sich der Laserscanner des Fahrzeugs, beziehungsweise die Scan-Ebene, in einem definierten Abstand in Vertikalrichtung zu dem Boden. Der erste Schild und der zweite Schild sind vorzugsweise derart ausgerichtet, dass der Spalt, insbesondere eine Mitte des Spalts, sich in dem gleichen definierten Abstand in Vertikalrichtung zu dem Boden befindet wie eine Scan-Ebene des Laserscanners. Eine Entfernung des Laserscanners zu der zweiten Reflexionsfläche ist kleiner als eine Entfernung des Laserscanners zu der ersten Reflexionsfläche. Eine Entfernung des Laserscanners zu der ersten Reflexionsfläche ist kleiner als eine Entfernung des Laserscanners zu der dritten Reflexionsfläche.

Wenn der Laserstrahl den ersten Schirm trifft, so wird der Laserstrahl von der ersten Reflexionsfläche des ersten Schirms reflektiert. Wenn der Laserstrahl den zweiten Schirm trifft, so wird der Laserstrahl von der zweiten Reflexionsfläche des zweiten Schirms reflektiert. Wenn der Laserstrahl den Spalt trifft, so wird der Laserstrahl von der dritten Reflexionsfläche des Schirms reflektiert.

Aus den gemessenen Entfernungen des Laserscanners zu der jeweiligen Reflexionsfläche wird eine Ausrichtung des Laserscanners ermittelt. Wenn der Laserstrahl von der ersten Reflexionsfläche des ersten Schirms reflektiert wird, so ist der Laserscanner in Vertikalrichtung nach oben, also von dem Boden weg, geneigt. Wenn der Laserstrahl von der zweiten Reflexionsfläche des zweiten Schirms reflektiert wird, so ist der Laserscanner in Vertikalrichtung nach unten, also auf den Boden zu, geneigt. Wenn der Laserstrahl von der dritten Reflexionsfläche des Schirms reflektiert wird, so verläuft der Laserstrahl in eine horizontale Richtung, und der Laserscanner ist horizontal ausgerichtet.

Während der Kalibrierung befindet sich der Laserscanner auch in Strahlrichtung in einem definierten Abstand zu der mindestens einen Reflexionseinheit. Der Abstand des Laserscanners in Strahlrichtung zu der Reflexionseinheit ist dabei signifikant größer als eine Ausdehnung der Reflexionseinheit in Querrichtung. Eine Entfernung des Laserscanners zu einem zentralen Bereich einer Reflexionsfläche ist somit nur unwesentlich kleiner als eine Entfernung des Laserscanners zu einem Randbereich der besagten Reflexionsfläche. Somit ist eine Entfernung des Laserscanners in Strahlrichtung zu einer Reflexionsfläche der Reflexionseinheit als annähernd konstant anzusehen. Falls der Abstand des Laserscanners in Strahlrichtung zu der Reflexionseinheit in einer ähnlichen Größenordnung wie die Ausdehnung der Reflexionseinheit in Querrichtung liegt, so ist die besagte Näherung nicht ausreichend genau. In diesem Fall bietet es sich an, die von dem Laserscanner gelieferten Polarkoordinaten, nämlich Abstrahlwinkel und Entfernung, in kartesische Koordinaten, nämlich Position in Querrichtung und Entfernung in Strahlrichtung, umzurechnen.

Das erfindungsgemäße Verfahren ermöglicht somit eine Kalibrierung eines Laserscanners eines Fahrzeugs, wobei es sich bei dem Fahrzeug insbesondere um ein autonom fahrendes Fahrzeug, wie beispielsweise ein selbstfahrendes mobiles Transportsystem, handelt. Mittels des Laserscanners ist das autonom fahrende Fahrzeug insbesondere dazu in der Lage, Hindernisse zu erkennen. Das erfindungsgemäße Verfahren benötigt einen verhältnismäßig geringen Platz, ermöglicht eine verhältnismäßig hohe Genauigkeit bei der Kalibrierung des Laserscanners, und benötigt einen verhältnismäßig geringen Zeitaufwand.

Erfindungsgemäß ist eine Ausdehnung der dritten Reflexionsfläche des Schirms in Vertikalrichtung größer als eine Ausdehnung des Spalts in Vertikalrichtung, und eine Ausdehnung der dritten Reflexionsfläche des Schirms in Querrichtung ist größer als eine Ausdehnung des Spalts in Querrichtung. Die Projektion des Spalts in Strahlrichtung fällt dabei vollständig auf die dritte Reflexionsfläche des Schirms. Somit fallen auch Laserstrahlen, die leicht geneigt zu der Strahlrichtung den Spalt treffen, noch auf die dritte Reflexionsfläche des Schirms.

Gemäß einer bevorzugten Weiterbildung der Erfindung wird die Überprüfung der Ausrichtung des Laserscanners in definierten, insbesondere periodischen, Zeitabständen wiederholt. Nach jeder Überprüfung wird, bei fehlerhafter Ausrichtung des Laserscanners, die Ausrichtung des Laserscanners korrigiert und/oder eine Anweisung zur Korrektur gegeben. Die Anweisung zur Korrektur wird beispielsweise an einen Zentralrechner oder an eine Bedienperson übermittelt. Die wiederholten Überprüfungen finden beispielsweise im Betrieb des Fahrzeugs in einer technischen Anlage regelmäßig, beispielsweise täglich, statt. Die wiederholten Überprüfungen finden dabei insbesondere automatisiert statt. Dabei bewegt sich das Fahrzeug zu der mindestens einen Reflexionseinheit und führt die Überprüfung der Ausrichtung des Laserscanners automatisiert durch. Wenn die Ausrichtung des Laserscanners korrekt ist, gibt das Fahrzeug eine entsprechende Meldung an einen Zentralrechner und geht wieder zu einem normalen Betrieb über. Eine fehlerhafte Ausrichtung des Laserscanners wird somit zeitnah erkannt.

Gemäß einer bevorzugten Ausgestaltung der Erfindung wird die Ausrichtung des Laserscanners korrigiert, indem der Laserscanner derart eingestellt wird, dass der Laserstrahl während der Bewegung in der Querrichtung durch den Spalt auf die dritte Reflexionsfläche trifft. Dann verläuft der Laserstrahl des Laserscanners in eine horizontale Richtung.

Gemäß einer vorteilhaften Ausgestaltung der Erfindung wird vor der Überprüfung der Ausrichtung des Laserscanners eine Neigung eines Bodens, auf welchem sich das Fahrzeug befindet, ermittelt. Dabei wird die mindestens eine Reflexionseinheit derart ausgerichtet, dass der Spalt sich in Vertikalrichtung auf gleicher Höhe befindet wie der Laserscanner. Zur Ermittlung der Neigung des Bodens wird beispielsweise eine digitale Wasserwaage verwendet, an deren Ende ein sichtbarer Punktlaser austritt.

Gemäß einer vorteilhaften Weiterbildung der Erfindung wird die ermittelte Ausrichtung des Laserscanners optisch und/oder akustisch dargestellt. Es wird also optisch und/oder akustisch dargestellt, ob der Laserscanner in Vertikalrichtung nach oben, also von dem Boden weg, geneigt ist, oder ob der Laserscanner in Vertikalrichtung nach unten, also auf den Boden zu, geneigt ist, oder ob der Laserscanner horizontal ausgerichtet ist. Vorteilhaft wird weiterhin die ermittelte Ausrichtung des Laserscanners an einen Zentralrechner übermittelt.

Gemäß einer vorteilhaften Weiterbildung der Erfindung wird der Laserstrahl des Laserscanners auf eine erste Reflexionseinheit zumindest annähernd in der Strahlrichtung der ersten Reflexionseinheit gerichtet, und der Laserstrahl wird in der Querrichtung der ersten Reflexionseinheit entlang der ersten Reflexionseinheit bewegt, und für mehrere Positionen des Laserstrahls in der Querrichtung wird jeweils eine Entfernung des Laserscanners zu derjenigen Reflexionsfläche der ersten Reflexionseinheit, von welcher der Laserstrahl reflektiert wird, gemessen. Auch wird der Laserstrahl des Laserscanners auf eine zweite Reflexionseinheit zumindest annähernd in der Strahlrichtung der zweiten Reflexionseinheit gerichtet, und der Laserstrahl wird in der Querrichtung der zweiten Reflexionseinheit entlang der zweiten Reflexionseinheit bewegt, und für mehrere Positionen des Laserstrahls in der Querrichtung wird jeweils eine Entfernung des Laserscanners zu derjenigen Reflexionsfläche der zweiten Reflexionseinheit, von welcher der Laserstrahl reflektiert wird, gemessen. Dabei sind die erste Reflexionseinheit und die zweite Reflexionseinheit derart ausgerichtet, dass die Vertikalrichtung der ersten Reflexionseinheit sich parallel zu der Vertikalrichtung der zweiten Reflexionseinheit erstreckt.

Durch diese Anordnung der beiden Reflexionseinheiten zueinander wird die Kalibrierung des Laserscanners für unterschiedliche Abstrahlwinkel der Laserstrahlen des Laserscanners und in Bezug zu zwei horizontalen, zueinander orthogonalen Achsen durchgeführt. Wenn der Laserstrahl die Spalte von beiden Reflexionseinheiten trifft, so wird der Laserstrahl von den dritten Reflexionsflächen der Schirme von beiden Reflexionseinheiten reflektiert. Der Laserstrahl des Laserscanners verläuft dann in einem Winkelbereich von über 90° in eine horizontale Richtung.

Gemäß einer vorteilhaften Ausgestaltung der Erfindung sind die erste Reflexionseinheit und die zweite Reflexionseinheit derart ausgerichtet, dass die Strahlrichtung der ersten Reflexionseinheit sich zumindest annähernd rechtwinklig zu der Strahlrichtung der zweiten Reflexionseinheit erstreckt. Durch diesen zumindest annähernd rechtwinkligen Versatz der beiden Reflexionseinheiten zueinander wird die Kalibrierung des Laserscanners für unterschiedliche Abstrahlwinkel der Laserstrahlen des Laserscanners und in Bezug zu zwei horizontalen, zueinander orthogonalen Achsen durchgeführt.

Gemäß einer vorteilhaften Ausgestaltung der Erfindung sind die erste Reflexionseinheit und die zweite Reflexionseinheit derart ausgerichtet, dass die Strahlrichtung der ersten Reflexionseinheit sich zumindest annähernd parallel zu der Querrichtung der zweiten Reflexionseinheit erstreckt. Durch diesen zumindest annähernd rechtwinkligen Versatz der beiden Reflexionseinheiten zueinander wird die Kalibrierung des Laserscanners für unterschiedliche Abstrahlwinkel der Laserstrahlen des Laserscanners und in Bezug zu zwei horizontalen, zueinander orthogonalen Achsen durchgeführt.

Vorteilhaft sind die erste Reflexionseinheit und die zweite Reflexionseinheit derart ausgerichtet, dass der Spalt der ersten Reflexionseinheit und der Spalt der zweiten Reflexionseinheit in der Vertikalrichtung miteinander fluchten. Wenn die beiden Reflexionseinheiten auf einem gemeinsamen Boden stehen, so sind die Spalte der Reflexionseinheiten somit gleich weit von dem Boden entfernt, und die Laserstrahlen des Laserscanners treffen beide Spalte von beiden Reflexionseinheiten.

Gemäß einer vorteilhaften Ausgestaltung der Erfindung weist die mindestens eine Reflexionseinheit einen ersten inneren Fuß, einen zweiten inneren Fuß, einen ersten äußeren Fuß und einen zweiten äußeren Fuß auf, welche in der Querrichtung versetzt zueinander angeordnet sind und sich vorwiegend in die Vertikalrichtung erstrecken. Dabei erstrecken der erste Schild und der zweite Schild sich in der Querrichtung zwischen den inneren Füßen, und der Schirm erstreckt sich in der Querrichtung zwischen den äußeren Füßen. Wenn der Laserstrahl einen Fuß der Reflexionseinheit trifft, so wird der Laserstrahl von dem entsprechenden Fuß der Reflexionseinheit reflektiert. Dadurch ist die Kalibrierung des Laserscanners mit erhöhter Präzision durchführbar. Ferner dienen die Füße zur mechanischen Befestigung der Schilde.

Gemäß einer vorteilhaften Weiterbildung der Erfindung umfasst der erste Schild einen Vorsprung, welcher eine vierte Reflexionsfläche aufweist, die sich zumindest annähernd rechtwinklig zu der Strahlrichtung erstreckt. Dabei ist die vierte Reflexionsfläche in der Strahlrichtung versetzt zu der ersten Reflexionsfläche angeordnet. Dadurch wird die Kalibrierung des Laserscanners vereinfacht. Insbesondere ist aufgrund des Versatzes der vierten Reflexionsfläche zu der ersten Reflexionsfläche einfach zu ermitteln, ob der Strahl auf den ersten Schild oder auf den zweiten Schild fällt.

Vorteilhaft weist die mindestens eine Reflexionseinheit mindestens einen Abstandshalter auf, welcher derart angeordnet ist, dass der erste Schild und der Schirm in der Strahlrichtung um einen ersten Abstand versetzt zueinander angeordnet sind. Dadurch ist die Kalibrierung des Laserscanners mit erhöhter Präzision durchführbar. Ferner ist der mindestens eine Abstandshalter zur mechanischen Befestigung des Schirms einsetzbar.

Gemäß einer vorteilhaften Weiterbildung der Erfindung sind die erste Reflexionsfläche des ersten Schildes und/oder die zweite Reflexionsfläche des zweiten Schildes mit schwarzem Schaumstoff verkleidet. Gemäß einer vorteilhaften Weiterbildung der Erfindung sind zumindest die Kanten des ersten Schildes und/oder die Kanten des zweiten Schildes angrenzend an den Spalt der Reflexionseinheit mit schwarzem Schaumstoff verkleidet.

Eine erfindungsgemäße technische Anlage umfasst mindestens ein Fahrzeug, welches einen Laserscanner aufweist, und mindestens eine Reflexionseinheit zur Reflexion eines Laserstrahls des Laserscanners. Dabei ist die technische Anlage zur Ausführung des erfindungsgemäßen Verfahrens eingerichtet. Bei der technischen Anlage handelt es sich insbesondere um eine industrielle Anwendung, beispielsweise ein Produktionswerk.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine schematische Darstellung einer Vorrichtung zur Kalibrierung eines Laserscanners,
- Figur 2:: eine perspektivische Darstellung einer Reflexionseinheit,
- Figur 3:: eine Frontansicht auf eine Reflexionseinheit,
- Figur 4:: ein erstes Diagramm mit gemessenen Entfernungen,
- Figur 5:: ein zweites Diagramm mit gemessenen Entfernungen,
- Figur 6:: ein drittes Diagramm mit gemessenen Entfernungen,
- Figur 7:: ein viertes Diagramm mit gemessenen Entfernungen und
- Figur 8:: ein fünftes Diagramm mit gemessenen Entfernungen.

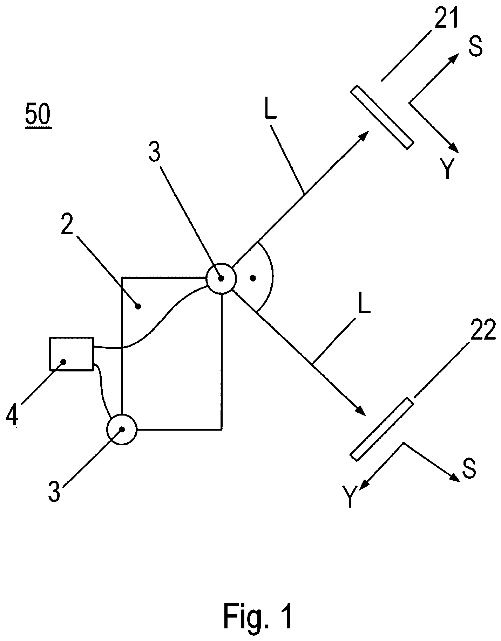

Figur 1 zeigt eine schematische Darstellung einer Vorrichtung zur Kalibrierung eines Laserscanners 3 eines Fahrzeugs 2. Bei dem Fahrzeug 2 handelt es sich vorliegend um ein autonom fahrendes Fahrzeug 2, insbesondere um ein selbstfahrendes mobiles Transportsystem. Das Fahrzeug 2 weist einen annähernd rechteckigen Grundriss auf. An zwei diagonal gegenüberliegenden Ecken des Fahrzeugs 2 ist jeweils ein Laserscanner 3 angeordnet. Jeder der Laserscanner 3 sendet einen Laserstrahl L aus, detektiert einen reflektierten Laserstrahl L, und berechnet daraus eine Entfernung D zu einem Objekt, das den Laserstrahl L reflektiert. Jeder von den Laserscannern 3 ausgesendeten Laserstrahlen L wird in einem Winkelbereich von etwa 270° bewegt.

Die Laserscanner 3 sind mit einem Digitalrechner 4 verbunden. Während einer Kalibrierung der Laserscanner 3 werden Daten, insbesondere Daten über gemessene Entfernungen D zu Objekten, von den Laserscannern 3 zu dem Digitalrechner 4 übertragen. Der Digitalrechner 4 ermittelt aus den gemessenen Entfernungen D eine Ausrichtung des Laserscanners 3 und stellt die ermittelte Ausrichtung des Laserscanners 3 optisch sowie akustisch dar.

Die Vorrichtung umfasst eine erste Reflexionseinheit 21 zur Reflexion eines Laserstrahls L des Laserscanners 3 und eine zweite Reflexionseinheit 22 zur Reflexion eines Laserstrahls L des Laserscanners 3. Das Fahrzeug 2 und die Reflexionseinheiten 21, 22 stehen vorliegend auf einem ebenen Boden 50. Die Reflexionseinheiten 21, 22 sind Objekte, die Laserstrahlen L reflektieren.

Jede der Reflexionseinheiten 21, 22 weist eine Frontseite auf, welche sich zumindest annähernd rechtwinklig zu einer jeweiligen Strahlrichtung S erstreckt. Eine jeweilige Querrichtung Y erstreckt sich rechtwinklig zu der jeweiligen Strahlrichtung S. Eine jeweilig Vertikalrichtung Z erstreckt sich rechtwinklig zu der jeweiligen Strahlrichtung S und rechtwinklig zu der jeweiligen Querrichtung Y. Die besagten Richtungsangaben Vertikalrichtung Z, Querrichtung Y und Strahlrichtung S sind jeweils in Bezug auf die jeweilige Reflexionseinheit 21, 22 definiert. Vorliegend erstrecken sich die Vertikalrichtungen Z der Reflexionseinheiten 21, 22 parallel zueinander und rechtwinklig zu dem Boden 50, auf welchem die Reflexionseinheiten 21, 22 und das Fahrzeug 2 stehen.

Jede der Reflexionseinheiten 21, 22 ist derart ausgerichtet, dass ein von dem einen Laserscanner 3 des Fahrzeugs 2 ausgesendeter Laserstrahl L, der die Frontseite der jeweiligen Reflexionseinheit 21, 22 in der jeweiligen Querrichtung Y mittig trifft, zumindest annähernd in die jeweilige Strahlrichtung S verläuft. In einem bestimmten Abstrahlwinkel trifft der Laserstrahl L also zumindest annähernd rechtwinklig auf die Frontseite der jeweiligen Reflexionseinheit 21, 22.

Die Strahlrichtung S der ersten Reflexionseinheit 21 erstreckt sich zumindest annähernd rechtwinklig zu der Strahlrichtung S der zweiten Reflexionseinheit 22. Die Strahlrichtung S der ersten Reflexionseinheit 21 erstreckt sich zumindest annähernd parallel zu der Querrichtung Y der zweiten Reflexionseinheit 22. Ein Abstrahlwinkel, in welchem der Laserstrahl L zumindest annähernd rechtwinklig auf die Frontseite der ersten Reflexionseinheit 21 trifft, ist somit um zumindest annähernd 90° zu einem Abstrahlwinkel, in welchem der Laserstrahl L zumindest annähernd rechtwinklig auf die Frontseite der zweiten Reflexionseinheit 22 trifft, versetzt.

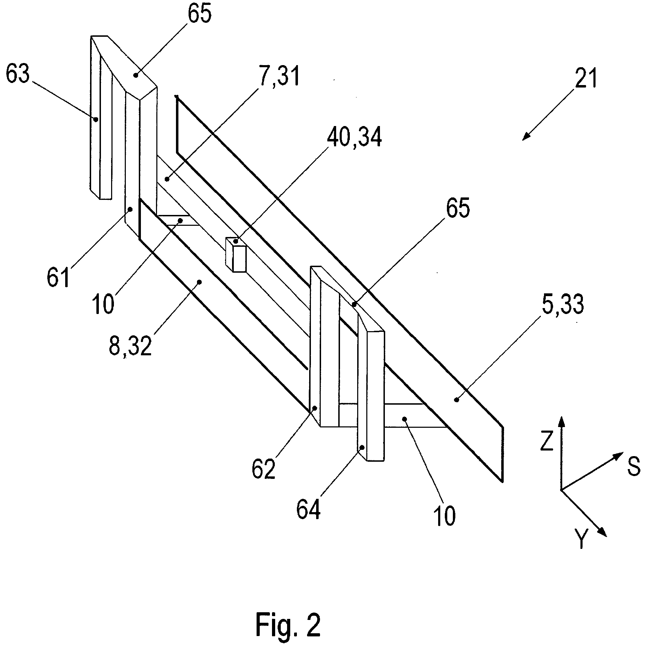

Figur 2 zeigt eine perspektivische Darstellung einer der in Figur 1 gezeigten ersten Reflexionseinheit 21. Die beiden Reflexionseinheiten 21, 22 sind identisch ausgestaltet. Die Reflexionseinheit 21 umfasst einen ersten Schild 7, einen zweiten Schild 8 und einen Schirm 5.

Der erste Schild 7 ist in Strahlrichtung S zwischen dem zweiten Schild 8 und dem Schirm 5 angeordnet. Der erste Schild 7 und der Schirm 5 sind in der Strahlrichtung S um einen ersten Abstand versetzt zueinander angeordnet. Der erste Schild 7 und der zweite Schild 8 sind in der Strahlrichtung S um einen zweiten Abstand versetzt zueinander angeordnet. Der erste Schild 7 ist in Vertikalrichtung Z versetzt zu dem zweiten Schild 8 angeordnet. Der zweite Schild 8 ist dabei näher an dem Boden 50 angeordnet als der erste Schild 7.

Der erste Schild 7 weist eine erste Reflexionsfläche 31 auf, die sich zumindest annähernd rechtwinklig zu der Strahlrichtung S erstreckt. Der zweite Schild 8 weist eine zweite Reflexionsfläche 32 auf, die sich ebenfalls zumindest annähernd rechtwinklig zu der Strahlrichtung S erstreckt. Der Schirm 5 weist eine dritte Reflexionsfläche 33 auf, die sich auch zumindest annähernd rechtwinklig zu der Strahlrichtung S erstreckt.

Die Reflexionseinheit 21 weist einen ersten inneren Fuß 61, einen zweiten inneren Fuß 62, einen ersten äußeren Fuß 63 und einen zweiten äußeren Fuß 64 auf. Die Füße 61, 62, 63, 64 erstrecken sich vorwiegend in die Vertikalrichtung Z. Die Schilde 7, 8 sind an den beiden inneren Füßen 61, 62 befestigt. Die Füße 61, 62, 63, 64 sind in Querrichtung Y versetzt zueinander angeordnet. Die ersten Füße 61, 63 sind mittels eines Querschenkels 65 miteinander verbunden. Auch die zweiten Füße 62, 64 sind mittels eines Querschenkels 65 miteinander verbunden.

An den inneren Füßen 61, 62 ist jeweils ein Abstandshalter 10 angebracht. Die Abstandshalter 10 sind derart angeordnet, dass der erste Schild 7 und der Schirm 5 in Strahlrichtung S um den ersten Abstand versetzt zueinander angeordnet sind.

Der erste Schild 7 umfasst einen Vorsprung 40, welcher eine vierte Reflexionsfläche 34 aufweist. Die vierte Reflexionsfläche 34 erstreckt sich rechtwinklig zu der Strahlrichtung S. Die vierte Reflexionsfläche 34 ist in der Strahlrichtung S versetzt zu der ersten Reflexionsfläche 31 angeordnet. Beispielsweise ist die vierte Reflexionsfläche 34 in Strahlrichtung S zwischen der ersten Reflexionsfläche 31 und der zweiten Reflexionsfläche 32 angeordnet, oder die vierte Reflexionsfläche 34 fluchtet mit der zweiten Reflexionsfläche 32.

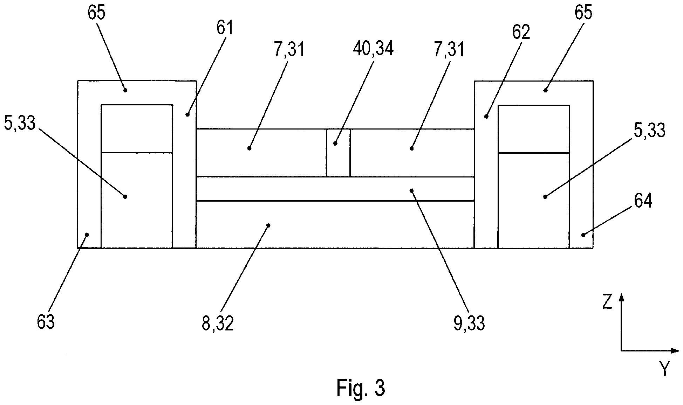

Figur 3 zeigt eine Frontansicht, also eine Sicht auf eine Frontseite, der Reflexionseinheit 21. Der erste Schild 7 ist in Vertikalrichtung Z derart versetzt zu dem zweiten Schild 8 angeordnet, dass zwischen dem ersten Schild 7 und dem zweiten Schild 8 ein Spalt 9 gebildet ist, der sich in Vertikalrichtung Z und in Querrichtung Y erstreckt. In Querrichtung Y ist der Spalt 9 von den beiden inneren Füßen 61, 62 begrenzt. Die erste Reflexionseinheit 21 und die zweite Reflexionseinheit 22, die in Figur 1 gezeigt sind, sind derart ausgerichtet, dass der Spalt 9 der ersten Reflexionseinheit 21 und der Spalt 9 der zweiten Reflexionseinheit 22 in Vertikalrichtung Z miteinander fluchten.

Der Schirm 5 ist derart ausgebildet und angeordnet, dass eine Projektion des Spalts 9 in Strahlrichtung S vollständig auf die dritte Reflexionsfläche 33 des Schirms 5 fällt. Eine Ausdehnung der dritten Reflexionsfläche 33 des Schirms 5 in Vertikalrichtung Z ist größer als eine Ausdehnung des Spalts 9 in Vertikalrichtung Z, und eine Ausdehnung der dritten Reflexionsfläche 31 des Schirms 5 in Querrichtung Y ist größer als eine Ausdehnung des Spalts 9 in Querrichtung Y.

Der Schirm 5 erstreckt sich in der Querrichtung Y zwischen den äußeren Füßen 63, 64. In der hier gezeigten Darstellung ist somit zwischen den ersten Füßen 61, 63 sowie zwischen den zweiten Füße 62, 64 jeweils die dritte Reflexionsfläche 33 des Schirms 5 sichtbar. Der Schirm 5 erstreckt sich in der Vertikalrichtung Z von dem Boden 50 bis zu einer Oberkante des ersten Schildes 7. Der erste Schild 7 sitzt auf dem Boden 50 auf.

Zur Kalibrierung eines der in Figur 1 dargestellten Laserscanner 3 wird ein Laserstrahl L des besagten Laserscanners 3 auf eine Reflexionseinheit 21, 22 gerichtet. Der Laserstrahl L wird dabei in der Querrichtung Y entlang der Reflexionseinheit 21, 22 bewegt. Dabei durchläuft der Laserstrahl L einen Bereich von Abstrahlwinkeln. Jede Position P des Laserstrahls L in der Querrichtung Y entspricht dabei einem bestimmten Abstrahlwinkel des Laserstrahls L. Für mehrere Positionen P des Laserstrahls L in der Querrichtung Y wird jeweils eine Entfernung D des Laserscanners 3 zu derjenigen Reflexionsfläche 31, 32, 33 gemessen, von welcher der Laserstrahl L reflektiert wird. Aus den gemessenen Entfernungen D wird anschließend eine Ausrichtung des Laserscanners 3 ermittelt.

In Querrichtung Y in der Mitte der Reflexionseinheit 21, 22 verläuft der Laserstrahl L zumindest annähernd in Strahlrichtung S und trifft dort zumindest annähernd rechtwinklig auf die Reflexionseinheit 21, 22. Wenn ein Abstand des Laserscanners 3 in Strahlrichtung S zu der Reflexionseinheit 21, 22 signifikant größer ist als eine Ausdehnung der Reflexionseinheit 21, 22 in Querrichtung Y, so ist der Abstrahlwinkel des Laserstrahls L annähernd proportional zu der Position P des Laserstrahls L in der Querrichtung Y. Falls diese Näherung nicht ausreichend genau ist, so sind die von dem Laserscanner 3 gelieferten Polarkoordinaten, nämlich Abstrahlwinkel und Entfernung D, in kartesische Koordinaten, nämlich Position P in Querrichtung Y und Entfernung D in Strahlrichtung S, umzurechnen.

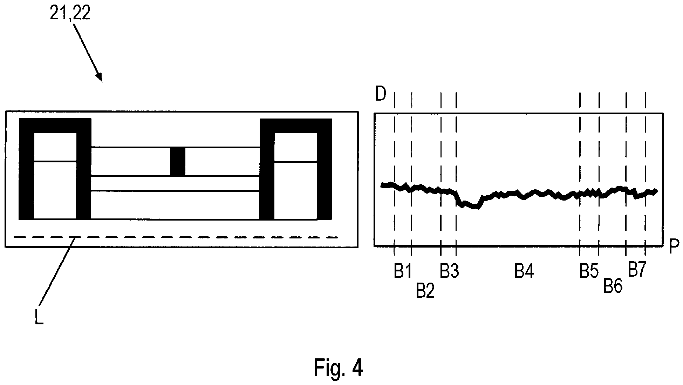

Figur 4 zeigt ein erstes Diagramm mit gemessenen Entfernungen D in Abhängigkeit von der Position P des Laserstrahls L in Querrichtung Y. Die Position P des Laserstrahls L ist dabei in sieben Abschnitte B1, B2, B3, B4, B5, B6, B7 unterteilt.

In allen sieben Abschnitten B1, B2, B3, B4, B5, B6, B7 trifft der Laserstrahl L auf den Boden 50. Von dem Boden 50 wird der Laserstrahl L diffus reflektiert. Der Laserstrahl L verläuft also nach unten geneigt, und der Laserscanner 3 ist damit fehlerhaft, nämlich zu tief, ausgerichtet.

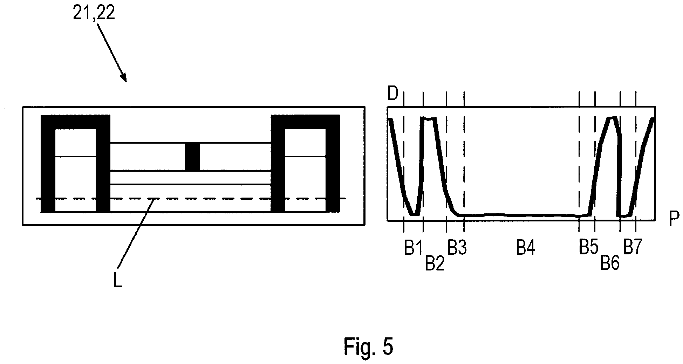

Figur 5 zeigt ein zweites Diagramm mit gemessenen Entfernungen D in Abhängigkeit von der Position P des Laserstrahls L in Querrichtung Y. Die Position P des Laserstrahls L ist dabei in sieben Abschnitte B1, B2, B3, B4, B5, B6, B7 unterteilt.

In dem ersten Abschnitt B1 trifft der Laserstrahl L auf den ersten äußeren Fuß 63 und wird von diesem reflektiert. In dem zweiten Abschnitt B2 trifft der Laserstrahl L zwischen dem ersten äußeren Fuß 63 und dem ersten inneren Fuß 61 vorbei auf den Schirm 5 und wird von der dritten Reflexionsfläche 33 reflektiert. In dem dritten Abschnitt B3 trifft der Laserstrahl L auf den ersten inneren Fuß 61 und wird von diesem reflektiert. In dem vierten Abschnitt B4 trifft der Laserstrahl L zwischen dem ersten inneren Fuß 61 und dem zweiten inneren Fuß 62 auf den zweiten Schild 8 und wird von der zweiten Reflexionsfläche 32 reflektiert. In dem fünften Abschnitt B5 trifft der Laserstrahl L auf den zweiten inneren Fuß 62 und wird von diesem reflektiert. In dem sechsten Abschnitt B6 trifft der Laserstrahl L zwischen dem zweiten inneren Fuß 63 und dem zweiten äußeren Fuß 64 vorbei auf den Schirm 5 und wird von der dritten Reflexionsfläche 33 reflektiert. In dem siebten Abschnitt B7 trifft der Laserstrahl L auf den zweiten äußeren Fuß 64 und wird von diesem reflektiert. Der Laserstrahl L verläuft also nach unten geneigt, und der Laserscanner 3 ist damit fehlerhaft, nämlich zu tief, ausgerichtet.

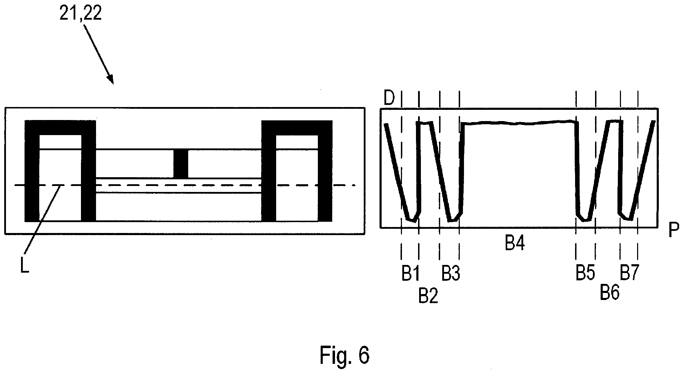

Figur 6 zeigt ein drittes Diagramm mit gemessenen Entfernungen D in Abhängigkeit von der Position P des Laserstrahls L in Querrichtung Y. Die Position P des Laserstrahls L ist dabei in sieben Abschnitte B1, B2, B3, B4, B5, B6, B7 unterteilt.

In dem ersten Abschnitt B1 trifft der Laserstrahl L auf den ersten äußeren Fuß 63 und wird von diesem reflektiert. In dem zweiten Abschnitt B2 trifft der Laserstrahl L zwischen dem ersten äußeren Fuß 63 und dem ersten inneren Fuß 61 vorbei auf den Schirm 5 und wird von der dritten Reflexionsfläche 33 reflektiert. In dem dritten Abschnitt B3 trifft der Laserstrahl L auf den ersten inneren Fuß 61 und wird von diesem reflektiert. In dem vierten Abschnitt B4 trifft der Laserstrahl L zwischen dem ersten inneren Fuß 61 und dem zweiten inneren Fuß 62 auf den Spalt 9 und damit auf den Schirm 5 und wird von der dritten Reflexionsfläche 33 reflektiert. In dem fünften Abschnitt B5 trifft der Laserstrahl L auf den zweiten inneren Fuß 62 und wird von diesem reflektiert. In dem sechsten Abschnitt B6 trifft der Laserstrahl L zwischen dem zweiten inneren Fuß 63 und dem zweiten äußeren Fuß 64 vorbei auf den Schirm 5 und wird von der dritten Reflexionsfläche 33 reflektiert. In dem siebten Abschnitt B7 trifft der Laserstrahl L auf den zweiten äußeren Fuß 64 und wird von diesem reflektiert. Der Laserstrahl L verläuft also in eine horizontale Richtung, und der Laserscanner 3 ist damit korrekt ausgerichtet.

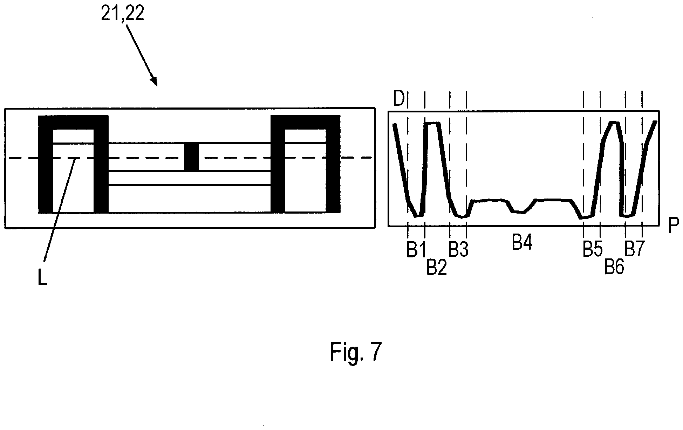

Figur 7 zeigt ein viertes Diagramm mit gemessenen Entfernungen D in Abhängigkeit von der Position P des Laserstrahls L in Querrichtung Y. Die Position P des Laserstrahls L ist dabei in sieben Abschnitte B1, B2, B3, B4, B5, B6, B7 unterteilt.

In dem ersten Abschnitt B1 trifft der Laserstrahl L auf den ersten äußeren Fuß 63 und wird von diesem reflektiert. In dem zweiten Abschnitt B2 trifft der Laserstrahl L zwischen dem ersten äußeren Fuß 63 und dem ersten inneren Fuß 61 vorbei auf den Schirm 5 und wird von der dritten Reflexionsfläche 33 reflektiert. In dem dritten Abschnitt B3 trifft der Laserstrahl L auf den ersten inneren Fuß 61 und wird von diesem reflektiert. In dem vierten Abschnitt B4 trifft der Laserstrahl L zwischen dem ersten inneren Fuß 61 und dem zweiten inneren Fuß 62 auf den ersten Schild 7 und wird von der ersten Reflexionsfläche 31 reflektiert. In einem zentralen Bereich des vierten Abschnitts B4 trifft der Laserstrahl L jedoch auf den Vorsprung 40 und wird von der vierten Reflexionsfläche 34 reflektiert. In dem fünften Abschnitt B5 trifft der Laserstrahl L auf den zweiten inneren Fuß 62 und wird von diesem reflektiert. In dem sechsten Abschnitt B6 trifft der Laserstrahl L zwischen dem zweiten inneren Fuß 63 und dem zweiten äußeren Fuß 64 vorbei auf den Schirm 5 und wird von der dritten Reflexionsfläche 33 reflektiert. In dem siebten Abschnitt B7 trifft der Laserstrahl L auf den zweiten äußeren Fuß 64 und wird von diesem reflektiert. Der Laserstrahl L verläuft also nach oben geneigt, und der Laserscanner 3 ist damit fehlerhaft, nämlich zu hoch, ausgerichtet.

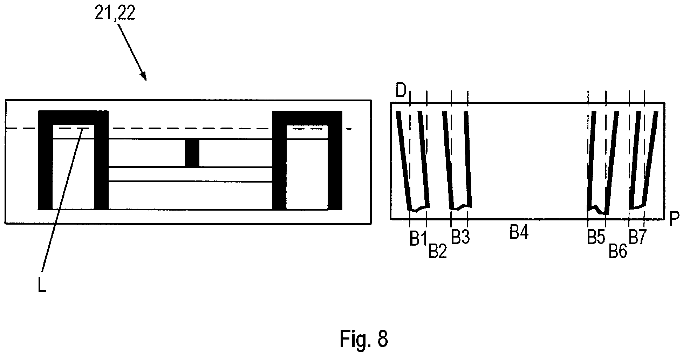

Figur 8 zeigt ein fünftes Diagramm mit gemessenen Entfernungen D in Abhängigkeit von der Position P des Laserstrahls L in Querrichtung Y. Die Position P des Laserstrahls L ist dabei in sieben Abschnitte B1, B2, B3, B4, B5, B6, B7 unterteilt.

In dem ersten Abschnitt B1 trifft der Laserstrahl L auf den ersten äußeren Fuß 63 und wird von diesem reflektiert. In dem zweiten Abschnitt B2 trifft der Laserstrahl L zwischen dem ersten äußeren Fuß 63 und dem ersten inneren Fuß 61 vorbei und wird nicht von der Reflexionseinheit 21, 22 reflektiert. In dem dritten Abschnitt B3 trifft der Laserstrahl L auf den ersten inneren Fuß 61 und wird von diesem reflektiert. In dem vierten Abschnitt B4 trifft der Laserstrahl L zwischen dem ersten inneren Fuß 61 und dem zweiten inneren Fuß 62 vorbei und wird nicht von der Reflexionseinheit 21, 22 reflektiert. In dem fünften Abschnitt B5 trifft der Laserstrahl L auf den zweiten inneren Fuß 62 und wird von diesem reflektiert. In dem sechsten Abschnitt B6 trifft der Laserstrahl L zwischen dem zweiten inneren Fuß 63 und dem zweiten äußeren Fuß 64 vorbei und wird nicht von der Reflexionseinheit 21, 22 reflektiert. In dem siebten Abschnitt B7 trifft der Laserstrahl L auf den zweiten äußeren Fuß 64 und wird von diesem reflektiert. Der Laserstrahl L verläuft also nach oben geneigt, und der Laserscanner 3 ist damit fehlerhaft, nämlich zu hoch, ausgerichtet.

### Bezugszeichenliste

- 2: Fahrzeug
- 3: Laserscanner
- 4: Digitalrechner
- 5: Schirm
- 7: erster Schild
- 8: zweiter Schild
- 9: Spalt
- 10: Abstandshalter
- 21: erste Reflexionseinheit
- 22: zweite Reflexionseinheit
- 31: erste Reflexionsfläche
- 32: zweite Reflexionsfläche
- 33: dritte Reflexionsfläche
- 34: vierte Reflexionsfläche
- 40: Vorsprung
- 50: Boden
- 61: erster innerer Fuß
- 62: zweiten innerer Fuß
- 63: erster äußerer Fuß
- 64: zweiter äußerer Fuß
- 65: Querschenkel

- B1: erster Abschnitt
- B2: zweiter Abschnitt
- B3: dritter Abschnitt
- B4: vierter Abschnitt
- B5: fünfter Abschnitt
- B6: sechster Abschnitt
- B7: siebter Abschnitt
- D: Entfernung
- L: Laserstrahl
- P: Position
- S: Strahlrichtung
- Y: Querrichtung
- Z: Vertikalrichtung

## Patentansprüche

1. Verfahren zur Kalibrierung eines Laserscanners (3) eines Fahrzeugs (2)
mittels mindestens einer Reflexionseinheit (21, 22) zur Reflexion eines Laserstrahls (L) des Laserscanners (3), **dadurch gekennzeichnet, dass**
die mindestens eine Reflexionseinheit (21, 22)
einen ersten Schild (7), einen zweiten Schild (8) und einen Schirm (5) umfasst, wobei der erste Schild (7) in einer Strahlrichtung (S) zwischen dem zweiten Schild (8) und dem Schirm (5) angeordnet ist, und dass
der erste Schild (7) eine erste Reflexionsfläche (31) aufweist, die sich zumindest annähernd rechtwinklig zu der Strahlrichtung (S) erstreckt, und dass
der zweite Schild (8) eine zweite Reflexionsfläche (32) aufweist, die sich zumindest annähernd rechtwinklig zu der Strahlrichtung (S) erstreckt, und dass
der Schirm (5) eine dritte Reflexionsfläche (33) aufweist, die sich zumindest annähernd rechtwinklig zu der Strahlrichtung (S) erstreckt, und dass
der erste Schild (7) in einer Vertikalrichtung (Z) derart versetzt zu dem zweiten Schild (8) angeordnet ist, dass zwischen dem ersten Schild (7) und dem zweiten Schild (8) ein Spalt (9) gebildet ist, der sich in die Vertikalrichtung (Z) und in eine Querrichtung (Y) erstreckt, und dass der Schirm (5) derart ausgebildet und angeordnet ist, dass eine Projektion des Spalts (9) in Strahlrichtung (S) auf die dritte Reflexionsfläche (33) des Schirms (5) fällt, und dass eine Ausdehnung der dritten Reflexionsfläche (33) des Schirms (5) in Vertikalrichtung (Z) größer ist als eine Ausdehnung des Spalts (9) in Vertikalrichtung (Z), und dass
eine Ausdehnung der dritten Reflexionsfläche (31) des Schirms (5) in Querrichtung (Y) größer ist als eine Ausdehnung des Spalts (9) in Querrichtung (Y),
wobei
eine Ausrichtung des Laserscanners (3) überprüft wird, indem
ein Laserstrahl (L) des Laserscanners (3) auf die mindestens eine Reflexionseinheit (21, 22) zumindest annähernd in der Strahlrichtung (S) gerichtet wird, und
der Laserstrahl (L) in der Querrichtung (Y) entlang der mindestens einen Reflexionseinheit (21, 22) bewegt wird, und
für mehrere Positionen (P) des Laserstrahls (L) in der Querrichtung (Y) jeweils eine Entfernung (D) des Laserscanners (3) zu derjenigen Reflexionsfläche (31, 32, 33), von welcher der Laserstrahl (L) reflektiert wird, gemessen wird, und
aus den gemessenen Entfernungen (D) des Laserscanners (3) zu der jeweiligen Reflexionsfläche (31, 32, 33) eine Ausrichtung des Laserscanners (3) ermittelt wird, und wobei bei fehlerhafter Ausrichtung des Laserscanners (3)
die Ausrichtung des Laserscanners (3) korrigiert und/oder eine Anweisung zur Korrektur gegeben wird.

2. Verfahren nach Anspruch 1, **dadurch gekennzeichnet, dass**
die Überprüfung der Ausrichtung des Laserscanners (3) in definierten, insbesondere periodischen, Zeitabständen wiederholt wird, und dass
nach jeder Überprüfung bei fehlerhafter Ausrichtung des Laserscanners (3)
die Ausrichtung des Laserscanners (3) korrigiert und/oder eine Anweisung zur Korrektur gegeben wird.

3. Verfahren nach einem der vorangegangenen Ansprüche, **dadurch gekennzeichnet, dass**
die Ausrichtung des Laserscanners (3) korrigiert wird, indem
der Laserscanner (3) derart eingestellt wird, dass der Laserstrahl (L) während der Bewegung in der Querrichtung (Y) durch den Spalt (9) auf die dritte Reflexionsfläche (33) trifft.

4. Verfahren nach einem der vorangegangenen Ansprüche, **dadurch gekennzeichnet, dass**
vor der Überprüfung der Ausrichtung des Laserscanners (3)
eine Neigung eines Bodens (50), auf welchem sich das Fahrzeug (2) befindet, ermittelt wird, und dass
die mindestens eine Reflexionseinheit (21, 22) derart ausgerichtet wird, dass
der Spalt (9) sich in Vertikalrichtung (Z) auf gleicher Höhe befindet wie der Laserscanner (3).

5. Verfahren nach einem der vorangegangenen Ansprüche, **dadurch gekennzeichnet, dass** die ermittelte Ausrichtung des Laserscanners (3) optisch und/oder akustisch dargestellt und/oder an einen Zentralrechner übermittelt wird.

6. Verfahren nach einem der vorangegangenen Ansprüche, **dadurch gekennzeichnet, dass**
der Laserstrahl (L) des Laserscanners (3) auf eine erste Reflexionseinheit (21) zumindest annähernd in der Strahlrichtung (S) der ersten Reflexionseinheit (21) gerichtet wird, und
der Laserstrahl (L) in der Querrichtung (Y) der ersten Reflexionseinheit (21) entlang der ersten Reflexionseinheit (21) bewegt wird, und
für mehrere Positionen (P) des Laserstrahls (L) in der Querrichtung (Y) jeweils eine Entfernung (D) des Laserscanners (3) zu derjenigen Reflexionsfläche (31, 32, 33) der ersten Reflexionseinheit (21), von welcher der Laserstrahl (L) reflektiert wird, gemessen wird, und dass der Laserstrahl (L) des Laserscanners (3) auf eine zweite Reflexionseinheit (22) zumindest annähernd in der Strahlrichtung (S) der zweiten Reflexionseinheit (22) gerichtet wird, und
der Laserstrahl (L) in der Querrichtung (Y) der zweiten Reflexionseinheit (22) entlang der zweiten Reflexionseinheit (22) bewegt wird, und
für mehrere Positionen (P) des Laserstrahls (L) in der Querrichtung (Y) jeweils eine Entfernung (D) des Laserscanners (3) zu derjenigen Reflexionsfläche (31, 32, 33) der zweiten Reflexionseinheit (22), von welcher der Laserstrahl (L) reflektiert wird, gemessen wird, wobei die erste Reflexionseinheit (21) und die zweite Reflexionseinheit (22) derart ausgerichtet sind, dass
die Vertikalrichtung (Z) der ersten Reflexionseinheit (21) sich parallel zu der Vertikalrichtung (Z) der zweiten Reflexionseinheit (22) erstreckt.

7. Verfahren nach Anspruch 6, **dadurch gekennzeichnet, dass**
die erste Reflexionseinheit (21) und die zweite Reflexionseinheit (22) derart ausgerichtet sind, dass
die Strahlrichtung (S) der ersten Reflexionseinheit (21) sich zumindest annähernd rechtwinklig zu der Strahlrichtung (S) der zweiten Reflexionseinheit (22) erstreckt.

8. Verfahren nach einem der Ansprüche 6 bis 7, **dadurch gekennzeichnet, dass**
die erste Reflexionseinheit (21) und die zweite Reflexionseinheit (22) derart ausgerichtet sind, dass
die Strahlrichtung (S) der ersten Reflexionseinheit (21) sich zumindest annähernd parallel zu der Querrichtung (Y) der zweiten Reflexionseinheit (22) erstreckt.

9. Verfahren nach einem der Ansprüche 6 bis 8, **dadurch gekennzeichnet, dass**
die erste Reflexionseinheit (21) und die zweite Reflexionseinheit (22) derart ausgerichtet sind, dass
der Spalt (9) der ersten Reflexionseinheit (21) und der Spalt (9) der zweiten Reflexionseinheit (22) in der Vertikalrichtung (Z) miteinander fluchten.

10. Verfahren nach einem der vorangegangenen Ansprüche, **dadurch gekennzeichnet, dass**
die mindestens eine Reflexionseinheit (21, 22) einen ersten inneren Fuß (61), einen zweiten inneren Fuß (62), einen ersten äußeren Fuß (63) und einen zweiten äußeren Fuß (64) aufweist, welche in der Querrichtung (Y) versetzt zueinander angeordnet sind und
sich vorwiegend in die Vertikalrichtung (Z) erstrecken, wobei
der erste Schild (7) und der zweite Schild (8) sich in der Querrichtung (Y) zwischen den inneren Füßen (61, 62) erstrecken, und wobei
der Schirm (5) sich in der Querrichtung (Y) zwischen den äußeren Füßen (63, 64) erstreckt.

11. Verfahren nach einem der vorangegangenen Ansprüche, **dadurch gekennzeichnet, dass**
der erste Schild (7) einen Vorsprung (40) umfasst, welcher eine vierte Reflexionsfläche (34) aufweist, die sich zumindest annähernd rechtwinklig zu der Strahlrichtung (S) erstreckt, wobei die vierte Reflexionsfläche (34) in der Strahlrichtung (S) versetzt zu der ersten Reflexionsfläche (31) angeordnet ist.

12. Technische Anlage, umfassend
mindestens ein Fahrzeug (2), welches einen Laserscanner (3) aufweist, und
mindestens eine Reflexionseinheit (21, 22) zur Reflexion eines Laserstrahls (L) des Laserscanners (3), wobei
die mindestens eine Reflexionseinheit (21, 22) einen ersten Schild (7), einen zweiten Schild (8) und einen Schirm (5) umfasst, wobei
der erste Schild in einer Strahlrichtung (S) zwischen dem zweiten Schild und dem Schirm angeordnet ist, und wobei
der erste Schild eine erste Reflexionsfläche (31) aufweist, die sich zumindest annähernd rechtwinklig zu der Strahlrichtung (S) erstreckt, und der zweite Schild eine zweite Reflexionsfläche (32) aufweist, die sich zumindest annähernd rechtwinklig zu der Strahlrichtung (S) erstreckt, und der Schirm eine dritte Reflexionsfläche (33) aufweist, die sich zumindest annähernd rechtwinklig zu der Strahlrichtung (S) erstreckt, und wobei
der erste Schild in einer Vertikalrichtung (Z) derart versetzt zu dem zweiten Schild angeordnet ist,
dass zwischen dem ersten Schild und dem zweiten Schild ein Spalt (9) gebildet ist, der sich in die Vertikalrichtung (Z) und in eine Querrichtung (Y) erstreckt, und wobei
der Schirm derart ausgebildet und angeordnet ist, dass eine Projektion des Spalts in Strahlrichtung (S) auf die dritte Reflexionsfläche des Schirms fällt, und wobei
eine Ausdehnung der dritten Reflexionsfläche des Schirms in Vertikalrichtung (Z) größer ist als eine Ausdehnung des Spalts in Vertikalrichtung (Z), und wobei
eine Ausdehnung der dritten Reflexionsfläche des Schirms in Querrichtung (Y) größer ist als eine Ausdehnung des Spalts in Querrichtung (Y), wobei
eine Ausrichtung des Laserscanners überprüft wird, indem ein Laserstrahl (L) des Laserscanners auf die mindestens eine Reflexionseinheit zumindest annähernd in der Strahlrichtung (S) gerichtet wird, und der Laserstrahl (L) in der Querrichtung (Y) entlang der mindestens einen Reflexionseinheit bewegt wird, und für mehrere Positionen (P) des Laserstrahls (L) in der Querrichtung (Y) jeweils eine Entfernung (D) des Laserscanners zu derjenigen Reflexionsfläche, von welcher der Laserstrahl (L) reflektiert wird, gemessen wird, und aus den gemessenen Entfernungen (D) des Laserscanners zu der jeweiligen Reflexionsfläche eine Ausrichtung des Laserscanners ermittelt wird, und wobei bei fehlerhafter Ausrichtung des Laserscanners die Ausrichtung des Laserscanners korrigiert und/oder eine Anweisung zur Korrektur gegeben wird, sodass die technische Anlage zur Ausführung des Verfahrens nach einem der vorangegangenen Ansprüche eingerichtet ist.

## Claims

1. A method of calibrating a laser scanner (3) of a vehicle (2) by means of at least one reflection unit (21, 22) for reflection of a laser beam (L) of the laser scanner (3), **characterised in that** the at least one reflection unit (21, 22) comprises a first plate (7), a second plate (8) and a screen (5), wherein the first plate (7) is arranged between the second plate (8) and the screen (5) in a beam direction (S), and **in that** the first plate (7) has a first reflection surface (31) which extends at least substantially at right angles to the beam direction (S), and **in that** the second plate (8) has a second reflection surface (32) which extends at least substantially at right angles to the beam direction (S), and **in that** the screen (5) has a third reflection surface (33) which extends at least substantially at right angles to the beam direction (S), and **in that** the first plate (7) is arranged offset relative to the second plate (8) in a vertical direction (Z) in such a manner that a gap (9) is formed between the first plate (7) and the second plate (8), which gap (9) extends in the vertical direction (Z) and in a transverse direction (Y), and **in that** the screen (5) is formed and arranged such that a projection of the gap (9) in the beam direction (S) falls onto the third reflection surface (33) of the screen (5), and **in that** a spread of the third reflection surface (33) of the screen (5) in the vertical direction (Z) is greater than a spread of the gap (9) in the vertical direction (Z), and **in that** a spread of the third reflection surface (31) of the screen (5) in the transverse direction (Y) is greater than a spread of the gap (9) in the transverse direction (Y),
wherein
an orientation of the laser scanner (3) is checked **in that** a laser beam (L) of the laser scanner (3) is directed onto the at least one reflection unit (21, 22) at least substantially in the beam direction (S), and the laser beam (L) is moved along the at least one reflection unit (21, 22) in the transverse direction (Y), and for a plurality of positions (P) of the laser beam (L) in the transverse direction (Y) there is in each case measured a distance (D) of the laser scanner (3) from that reflection surface (31, 32, 33) which reflects the laser beam (L), and from the measured distances (D) of the laser scanner (3) from the respective reflection surface (31, 32, 33) there is ascertained an orientation of the laser scanner (3), and wherein in the event of an incorrect orientation of the laser scanner (3) there is a correction of the orientation of the laser scanner (3) and/or an instruction to correct is given.

2. A method according to claim 1, **characterised in that** the checking of the orientation of the laser scanner (3) is repeated at defined, in particular periodic, time intervals, and **in that** after each check, the orientation of the laser scanner (3) is corrected and/or an instruction to correct is given in the event of an incorrect orientation of the laser scanner (3).

3. A method according to any one of the preceding claims, **characterised in that** the orientation of the laser scanner (3) is corrected **in that** the laser scanner (3) is adjusted such that the laser beam (L) strikes the third reflection surface (33) during the motion in the transverse direction (Y) through the gap (9).

4. A method according to any one of the preceding claims, **characterised in that** a slope of ground (50) on which the vehicle (2) is located is ascertained before the checking of the orientation of the laser scanner (3), and **in that** the at least one reflection unit (21, 22) is oriented such that the gap (9) is at the same height in a vertical direction (Z) as the laser scanner (3).

5. A method according to any one of the preceding claims, **characterised in that** the ascertained orientation of the laser scanner (3) is represented optically and/or acoustically and/or is transmitted to a central computer.

6. A method according to any one of the preceding claims, **characterised in that** the laser beam (L) of the laser scanner (3) is directed onto a first reflection unit (21) at least substantially in the beam direction (S) of the first reflection unit (21), and the laser beam ( L) is moved along the first reflection unit (21) in the transverse direction (Y) of the first reflection unit (21), and for a plurality of positions (P) of the laser beam (L) in the transverse direction (Y) there is in each case measured a distance (D) of the laser scanner (3) from that reflection surface (31, 32, 33) of the first reflection unit (21) by which the laser beam (L) is reflected, and **in that** the laser beam (L) of the laser scanner (3) is directed onto a second reflection unit (22) at least substantially in the beam direction (S) of the second reflection unit (22), and the laser beam (L) is moved along the second reflection unit (22) in the transverse direction (Y) of the second reflection unit (22), and for a plurality of positions (P) of the laser beam (L) in the transverse direction (Y) there is in each case measured a distance (D) of the laser scanner (3) from that reflection surface (31, 32, 33) of the second reflection unit (22) by which the laser beam (L) is reflected, wherein the first reflection unit (21) and the second reflection unit (22) are oriented such that the vertical direction (Z) of the first reflection unit (21) extends parallel to the vertical direction (Z) of the second reflection unit (22).

7. A method according to claim 6, **characterised in that** the first reflection unit (21) and the second reflection unit (22) are oriented such that the beam direction (S) of the first reflection unit (21) extends at least substantially at right angles to the beam direction (S) of the second reflection unit (22).

8. A method according to one of claims 6 to 7, **characterised in that** the first reflection unit (21) and the second reflection unit (22) are oriented such that the beam direction (S) of the first reflection unit (21) extends at least substantially parallel to the transverse direction (Y) of the second reflection unit (22).

9. A method according to any one of claims 6 to 8, **characterised in that** the first reflection unit (21) and the second reflection unit (22) are oriented such that the gap (9) of the first reflection unit (21) and the gap (9) of the second reflection unit (22) are aligned in the vertical direction (Z).

10. A method according to any one of the preceding claims, **characterised in that** the at least one reflection unit (21, 22) has a first inner foot (61), a second inner foot (62), a first outer foot (63) and a second outer foot (64), which are arranged offset relative to one another in the transverse direction (Y) and predominantly extend in the vertical direction (Z), wherein the first plate (7) and the second plate (8) extend in the transverse direction (Y) between the inner feet, (61, 62), and wherein the screen (5) extends in the transverse direction (Y) between the outer feet (63, 64).

11. A method according to any one of the preceding claims, **characterised in that** the first plate (7) comprises a projection (40) which has a fourth reflection surface (34) which extends at least substantially at right angles to the beam direction (S), wherein the fourth reflection surface (34) is arranged offset relative to the first reflection surface (31) in the beam direction (S).

12. A technical installation, comprising at least one vehicle (2), which has a laser scanner (3), and at least one reflection unit (21, 22) for reflection of a laser beam (L) of the laser scanner (3), wherein the at least one reflection unit (21, 22) comprises a first plate (7), a second plate (8) and a screen (5), wherein the first plate is arranged between the second plate and the screen in a beam direction (S), and wherein the first plate has a first reflection surface (31) which extends at least substantially at right angles to the beam direction (S), and the second plate has a second reflection surface (32) which extends at least substantially at right angles to the beam direction (S), and the screen has a third reflection surface (33) which extends at least substantially at right angles to the beam direction (S), and wherein the first plate is arranged offset relative to the second plate in a vertical direction (Z) in such a manner that a gap (9) is formed between the first plate and the second plate, which gap extends in the vertical direction (Z) and in a transverse direction (Y), and wherein the screen is formed and arranged such that a projection of the gap in the beam direction (S) falls onto the third reflection surface of the screen, and wherein a spread of the third reflection surface of the screen in the vertical direction (Z) is greater than a spread of the gap in the vertical direction (Z), and wherein a spread of the third reflection surface of the screen in the transverse direction (Y) is greater than a spread of the gap in the transverse direction (Y), wherein an orientation of the laser scanner is checked in that a laser beam (L) of the laser scanner is directed at least substantially in the beam direction (S) onto the at least one reflection unit, and the laser beam (L) is moved along the at least one reflection unit in the transverse direction (Y), and for a plurality of positions (P) of the laser beam (L) in the transverse direction (Y) there is in each case measured a distance (D) of the laser scanner from that reflection surface which reflects the laser beam (L), and from the measured distances (D) of the laser scanner from the respective reflection surface there is ascertained an orientation of the laser scanner, and wherein in the event of an incorrect orientation of the laser scanner there is a correction of the orientation of the laser scanner and/or an instruction to correct is given, so that the technical installation is configured for carrying out the method according to any one of the preceding claims.

## Revendications

1. Procédé d'étalonnage d'un scanner laser (3) d'un véhicule (2) au moyen d'au moins une unité de réflexion (21, 22) pour la réflexion d'un faisceau laser (L) du scanner laser (3), **caractérisé en ce que**
l'au moins une unité de réflexion (21, 22) comprend un premier écran (7), un deuxième écran (8) et un écran de protection (5), le premier écran (7) étant disposé dans une direction du faisceau (S) entre le deuxième écran (8) et l'écran de protection (5), et **en ce que**
le premier écran (7) présente une première surface de réflexion (31) qui s'étend au moins approximativement perpendiculaire à la direction du faisceau (S), et **en ce que**
le deuxième écran (8) présente une deuxième surface de réflexion (32) qui s'étend au moins approximativement perpendiculaire à la direction du faisceau (S), et **en ce que**
l'écran de protection (5) présente une troisième surface de réflexion (33) qui s'étend au moins approximativement perpendiculaire à la direction du faisceau (S), et **en ce que**
le premier écran (7) est disposé dans une direction verticale (Z) décalé par rapport au deuxième écran (8) de telle sorte qu'une fente (9) est formée entre le premier écran (7) et le deuxième écran (8), laquelle s'étend dans la direction verticale (Z) et dans une direction transversale (Y), et **en ce que**
l'écran de protection (5) est configuré et disposé de telle sorte qu'une projection de la fente (9) dans la direction du faisceau (S) tombe sur la troisième surface de réflexion (33) de l'écran de protection (5), et **en ce que**
une extension de la troisième surface de réflexion (33) de l'écran de protection (5) dans la direction verticale (Z) est supérieure à une extension de la fente (9) dans la direction verticale (Z), et **en ce que**
une extension de la troisième surface de réflexion (31) de l'écran de protection (5) dans la direction transversale (Y) est supérieure à une extension de la fente (9) dans la direction transversale (Y),
où
une orientation du scanner laser (3) est vérifiée **en ce que**
un faisceau laser (L) du scanner laser (3) est orienté sur l'au moins une unité de réflexion (21, 22) au moins approximativement dans la direction du faisceau (S), et
le faisceau laser (L) est déplacé dans la direction transversale (Y) le long de l'au moins une unité de réflexion (21, 22), et
pour plusieurs positions (P) du faisceau laser (L) dans la direction transversale (Y), une distance (D) du scanner laser (3) à la surface de réflexion (31, 32, 33) à partir de laquelle le faisceau laser (L) est réfléchi est mesurée, et
à partir des distances mesurées (D) du scanner laser (3) à la surface de réflexion respective (31, 32, 33), une orientation du scanner laser (3) est déterminée, et où en cas d'orientation incorrecte du scanner laser (3), l'orientation du scanner laser (3) est corrigée et/ou une instruction de correction est donnée.

2. Procédé selon la revendication 1, **caractérisé en ce que**
la vérification de l'orientation du scanner laser (3) est répétée à des intervalles de temps définis, en particulier périodiques, et **en ce que**
après chaque vérification, en cas d'orientation incorrecte du scanner laser (3), l'orientation du scanner laser (3) est corrigée et/ou une instruction de correction est donnée.

3. Procédé selon l'une des revendications précédentes, **caractérisé en ce que** l'orientation du scanner laser (3) est corrigée **en ce que**
le scanner laser (3) est réglé de telle sorte que le faisceau laser (L), lors du déplacement dans
la direction transversale (Y), passe à travers la fente (9) et atteint la troisième surface de réflexion (33).

4. Procédé selon l'une des revendications précédentes, **caractérisé en ce que** avant la vérification de l'orientation du scanner laser (3), une inclinaison d'un sol (50), sur lequel se trouve le véhicule (2), est déterminée,
et **en ce que**
l'au moins une unité de réflexion (21, 22) est alignée de telle sorte que la fente (9) se trouve dans la direction verticale (Z) à la même hauteur que le scanner laser (3).

5. Procédé selon l'une des revendications précédentes, **caractérisé en ce que** l'orientation déterminée du scanner laser (3) est représentée optiquement et/ou acoustiquement et/ou transmise à un ordinateur central.

6. Procédé selon l'une des revendications précédentes, **caractérisé en ce que** le faisceau laser (L) du scanner laser (3) est orienté sur une première unité de réflexion (21) au moins approximativement dans la direction du faisceau (S) de la première unité de réflexion (21), et
le faisceau laser (L) est déplacé dans la direction transversale (Y) de la première unité de réflexion (21) le long de la première unité de réflexion (21), et
pour plusieurs positions (P) du faisceau laser (L) dans la direction transversale (Y), une distance (D) du scanner laser (3) à la surface de réflexion (31, 32, 33) de la première unité de réflexion (21), à partir de laquelle le faisceau laser (L) est réfléchi, est mesurée, et **en ce que**
le faisceau laser (L) du scanner laser (3) est orienté sur une deuxième unité de réflexion (22) au moins approximativement dans la direction du faisceau (S) de la deuxième unité de réflexion (22), et le faisceau laser (L) est déplacé dans la direction transversale (Y) de la deuxième unité de réflexion (22) le long de la deuxième unité de réflexion (22), et
pour plusieurs positions (P) du faisceau laser (L) dans la direction transversale (Y), une distance (D) du scanner laser (3) à la surface de réflexion (31, 32, 33) de la deuxième unité de réflexion (22), à partir de laquelle le faisceau laser (L) est réfléchi, est mesurée, où la première unité de réflexion (21) et la deuxième unité de réflexion (22) sont alignées de telle sorte que
la direction verticale (Z) de la première unité de réflexion (21) s'étend parallèle à la direction verticale (Z) de la deuxième unité de réflexion (22).

7. Procédé selon la revendication 6, **caractérisé en ce que**
la première unité de réflexion (21) et la deuxième unité de réflexion (22) sont alignées de telle sorte que
la direction du faisceau (S) de la première unité de réflexion (21) s'étend au moins approximativement perpendiculaire à la direction du faisceau (S) de la deuxième unité de réflexion (22).

8. Procédé selon l'une des revendications 6 à 7, **caractérisé en ce que**
la première unité de réflexion (21) et la deuxième unité de réflexion (22) sont alignées de telle sorte que
la direction du faisceau (S) de la première unité de réflexion (21) s'étend au moins approximativement parallèle à la direction transversale (Y) de la deuxième unité de réflexion (22).

9. Procédé selon l'une des revendications 6 à 8, **caractérisé en ce que**
la première unité de réflexion (21) et la deuxième unité de réflexion (22) sont alignées de telle sorte que
la fente (9) de la première unité de réflexion (21) et la fente (9) de la deuxième unité de réflexion (22) sont alignées dans la direction verticale (Z).

10. Procédé selon l'une des revendications précédentes, **caractérisé en ce que**
l'au moins une unité de réflexion (21, 22) présente un premier pied intérieur (61), un deuxième pied intérieur (62), un premier pied extérieur (63) et un deuxième pied extérieur (64), qui sont disposés décalés les uns par rapport aux autres dans la direction transversale (Y) et s'étendent principalement dans la direction verticale (Z), où
le premier écran (7) et le deuxième écran (8) s'étendent dans la direction transversale (Y) entre les pieds intérieurs (61, 62), et où
l'écran de protection (5) s'étend dans la direction transversale (Y) entre les pieds extérieurs (63, 64).

11. Procédé selon l'une des revendications précédentes, **caractérisé en ce que** le premier écran (7) comprend une saillie (40), laquelle présente une quatrième surface de réflexion (34) qui s'étend au moins approximativement perpendiculaire à la direction du faisceau (S), où la quatrième surface de réflexion (34) est disposée dans la direction du faisceau (S) décalée par rapport à la première surface de réflexion (31).

12. Installation technique, comprenant
au moins un véhicule (2), lequel présente un scanner laser (3), et
au moins une unité de réflexion (21, 22) pour la réflexion d'un faisceau laser (L) du scanner laser (3), où
l'au moins une unité de réflexion (21, 22) comprend un premier écran (7), un deuxième écran (8) et un écran de protection (5), où
le premier écran est disposé dans une direction du faisceau (S) entre le deuxième écran et l'écran de protection,
et où
le premier écran présente une première surface de réflexion (31) qui s'étend au moins approximativement perpendiculaire à la direction du faisceau (S), et le deuxième écran présente une deuxième surface de réflexion (32) qui s'étend au moins approximativement perpendiculaire à la direction du faisceau (S), et l'écran de protection présente une troisième surface de réflexion (33) qui s'étend au moins approximativement perpendiculaire à la direction du faisceau (S), et où le premier écran est disposé dans une direction verticale (Z) décalé par rapport au deuxième écran,
de sorte qu'une fente (9) est formée entre le premier écran et le deuxième écran, laquelle s'étend dans la direction verticale (Z) et dans une direction transversale (Y), et où l'écran de protection est configuré et disposé de telle sorte qu'une projection de la fente dans la direction du faisceau (S) tombe sur la troisième surface de réflexion de l'écran de protection, et où une extension de la troisième surface de réflexion de l'écran de protection dans la direction verticale (Z) est supérieure à une extension de la fente dans la direction verticale (Z), et où une extension de la troisième surface de réflexion de l'écran de protection dans la direction transversale (Y) est supérieure à une extension de la fente dans la direction transversale (Y), où une orientation du scanner laser est vérifiée en ce qu'un faisceau laser (L) du scanner laser est orienté sur l'au moins une unité de réflexion au moins approximativement dans la direction du faisceau (S), et le faisceau laser (L) est déplacé dans la direction transversale (Y) le long de l'au moins une unité de réflexion, et pour plusieurs positions (P) du faisceau laser (L) dans la direction transversale (Y), une distance (D) du scanner laser à la surface de réflexion à partir de laquelle le faisceau laser (L) est réfléchi est mesurée, et à partir des distances mesurées (D) du scanner laser à la surface de réflexion respective, une orientation du scanner laser est déterminée, et où en cas d'orientation incorrecte
du scanner laser, l'orientation du scanner laser est corrigée et/ou une instruction de correction est donnée, de sorte que l'installation technique est conçue pour l'exécution du procédé selon l'une des revendications précédentes.
